# EUROPÄISCHE PATENTSCHRIFT

(11) **EP 1 486 887 B1**
(45) Veröffentlichungstag und Bekanntmachung des Hinweises auf die Patenterteilung: **14.11.2007**
(21) Anmeldenummer: 03405425.4
(22) Anmeldetag: 12.06.2003
(51) Int. Cl.: G06F 17/30, G06Q 30/00, H04L 29/08

(54) **Computerbasierte Dienstzentrale für die Selektion von Benutzeridentifizierungen und Inhaltsdaten**
Computer based service center for selecting user identifications and content
Centrale de services informatisée pour la selection d'identifications d'utilisateurs et de contenu

(43) Veröffentlichungstag der Anmeldung: 15.12.2004
(73) Patentinhaber: Swisscom AG, 3050 Bern (CH)
(72) Erfinder: Ledermann, Daniel, 3145 Niederscherli (CH); Swanström, Christoffer, 8002 Zürich (CH); Thyes, Olivier, 3014 Bern (CH); Marti, Urs-Viktor, 3018 Bern (CH)
(74) Vertreter: BOVARD AG

(56) Entgegenhaltungen:
- WO-A-01/42952
- WO-A-01/45018
- WO-A-02/059804
- US-A1- 2001 014 868
- US-A1- 2002 120 609
- US-A1- 2003 063 072
- US-B1- 6 317 722

## Beschreibung

### Technisches Gebiet

Die vorliegende Erfindung betrifft eine computerbasierte Dienstzentrale für die Selektion von Benutzeridentifizierungen und Inhaltsdaten. Die Erfindung betrifft insbesondere eine computerbasierte Dienstzentrale für die Selektion von Benutzeridentifizierungen und Inhaltsdaten, die eine Inhaltsrrietadatenbank, eine Benutzerdatenbank und ein Eingangsmodul zum Entgegennehmen von Eingangsdaten umfasst, wobei die Inhaltsmetadatenbank Inhaltsmetadaten umfasst, die Informationen über die Inhaltsdaten umfassen, und wobei die Benutzerdatenbank Benutzerdaten umfasst, die den Benutzeridentifizierungen zugeordnete Informationen über Benutzer umfassen.

### Stand der Technik

Mit der Verfügbarkeit von drahtlosen und vernetzten Breitbandnetzwerken wurde es für Benutzer möglich, auf Inhaltsdaten jeglicher Art zuzugreifen. So können Benutzer beispielsweise über DSL-Verbindungen (Digital Subscriber Line), über spezielle Datendienste wie GPRS (General Packet Radio Service) oder HSCSD (High Speed Circuit Switched Data) der zweiten Generation der Mobilfunknetze wie GSM-Netze (Global System for Mobile Communication), über Mobilfunknetze der dritten Generation wie UMTS (Universal Mobile Telecommunication System) oder über WLAN (Wireless Local Area Network) auf Multimediadaten zugreifen, die digitale Textdaten, Grafikdaten, Bilddaten, Audiodaten und/öder Videodaten umfassen. Die Menge der verfügbaren Inhaltsdaten, insbesondere im weltweit zugänglichen Internet (World Wide Web); ist so gross, dass die Benutzer für die Suche von für sie relevanten und interessanten Inhaltsdaten viel Zeit aufwenden müssen.

Während sich den Benutzern das Problem der Datenflut stellt, sehen sich die Anbieter der Inhaltsdaten damit konfrontiert, dass die Benutzer mit unterschiedlichsten Typen von Endgeräten, beispielsweise Mobilfunktelefone, PDA- (Personal Digital Assistant), Notebook- , Laptop- oder Personal Computer (PC), Tafel-PC oder Fernsehgeräte mit Zusatzgeräten wie Set-Top-Boxen; und über unterschiedliche Kommunikationsnetze und Kommunikationsdienste auf die Inhaltsdaten zugreifen. Die Anbieter müssen folglich bei der Übermittlung der Inhaltsdaten Benutzerkontextdaten berücksichtigen, die benutzerspezifische Informationen über die aktuelle Umgebung der Benutzer umfassen, das heisst über die Endgeräte und Kommunikationskanäle, die vom betreffenden Benutzer verwendet werden, und die Anbieter müssen die Inhaltsdaten und/oder die Übermittlung der Inhaltsdaten unter Berücksichtigung dieser Benutzerkontextdaten an die Eigenschaften des vom Benutzer verwendeten Endgeräts, beispielsweise Anzeigegrösse, Anzeigeauflösung oder Rechenleistung, und des verwendeten Kommunikationskanals, beispielsweise Bandbreite oder Sicherheit, anpassen. Neben Benutzerkontextdaten mit den technischen Eigenschaften und Anforderungen der aktuellen Umgebung eines Benutzers muss der Anbieter vermehrt auch Benutzerkontextdaten über den aktuellen Aufenthaltsort, das heisst die aktuelle geografische Position, als Teil der aktuellen Umgebung des Benutzers berücksichtigen, da Inhaltsdaten vermehrt ortsabhängig sind. Die Benutzerkontextdaten werden beispielsweise in einer Benutzerdatenbank gespeichert.

Für die Klassifizierung und Beschreibung von Inhaltsdaten werden so genannte Inhaltsmetadaten erstellt und in einer Inhaltsmetadatenbank gespeichert. Die Inhaltsmetadaten umfassen insbesondere eine Klassifizierung und Beschreibung des semantischen Inhalts der Inhaltsdaten. Als Inhaltsmetadaten für AudioNideodaten können beispielsweise Transkriptionen von Videosequenzen angeführt werden, die mittels Spracherkennung erstellt werden. Die Inhaltsmetadaten ermöglichen einerseits, gewünschte Inhaltsdaten zu suchen und andererseits innerhalb von Inhaltsdaten zu navigieren, beispielsweise eine gewünschte Stelle innerhalb einer AudioNideodatei zu finden.

Neben den erwähnten Benutzerkontextdaten werden für die Klassifizierung und Beschreibung von Benutzern weitere Benutzerdaten erfasst und in der Benutzerdatenbank gespeichert, die Benutzerpersönalien und Benutzerprofildaten mit Informationen über Interessen und Personalien der Benutzer umfassen. Die Informationen über Interessen eines Benutzers können auf Angaben vom Benutzer aber auch auf dem historischen Verhalten des Benutzers basieren, welches automatisch durch Profilierungsprozesse erfasst wird. Die Informationen über Interessen eines Benutzers umfassen beispielsweise Angaben über Inhaltsdaten, die der Benutzer explizit nicht beziehen will oder die der Benutzer interessant findet.

So genannte Personalisierungsplattformen bestimmen für einen betreffenden Benutzer relevante Inhaltsdaten basierend auf den Inhaltsmetadaten und den Benutzerdaten, die dem betreffenden Benutzer zugeordnet sind. Der Nachteil der bekannten Personalisierungsplattformen besteht darin, dass sie keine Flexibilität aufweisen und nur für eine konkrete Anwendung ausgelegt sind. Beispielsweise ist eine Anwendung für einen Filmführer oder Filmtipp fest darauf eingerichtet, einem Benutzer basierend auf seinen Benutzerdaten und unter Zuhilfenahme von Filmmetadaten Filme zu empfehlen, die er interessant finden könnte. Eine solche Anwendung lässt sich nicht ohne grossen Aufwand an Konfigurations- und Programmierarbeit in eine andere Anwendung erweitern oder ändern, die beispielsweise Wirtschaftsinformationen liefert, die von ähnlich interessierten Benutzern bezogen werden. Selbst innerhalb des gleichen Themenbereichs kann die Anwendung für einen Filmführer oder Filmtipp nicht einfach auf andere Anwendungen erweitert oder angepasst werden, beispielsweise in eine Anwendung, die andere Benutzer angibt, die sich für ähnliche Filme wie der anfragende Benutzer interessieren.

Das Dokument WO 01/42952 offenbart u.a. eine computergestützte Dienstzentrale mit einer Inhaltsmetadatenbank, einer Benutzerdatenbank; einem Modul zur Entgegennahme von Eingangsdaten und Datenfiltern. Die Benutzerdaten werden vom Benutzer selbst eingegeben, und die Metadatenbank wird vom Benutzer selbst interaktiv gesteuert. Die Dienstzentrale kann auch zu Werbungs- und Verkaufszwecken von Dritten benutzt und gesteuert werden und enthält zu diesem Zweck Benutzerdatenfilter.

Die veröffentlichte US-Patentanmeldung Nr. US 2003/0063072 A1 beschreibt ein Verfahren und eine Vorrichtung zur systematischen Organisation und zur Anzeige digital gespeicherter Daten. Die Daten werden über ein Kömmunikationsnetzwerk dem Benutzer übermittelt. Das System dieser Veröffentlichung beschreibt auch eine Kontextdatenbank.

Eine Gruppierung des Ergebnisses von parallel betriebenen Datenfiltern, das sogenannte "Clustering", ist in der veröffentlichten US-Patentanmeldung Nr. US 2001/0014868 A1 in Bezug.auf die Zusammenführung ähnlicher Benutzerprofile erwähnt.

### Darstellung der Erfindung

Es ist eine Aufgabe der vorliegenden Erfindung, eine neue computerbasierte Dienstzentrale für die Selektion von Benutzeridentifzierungen und Inhaltsdaten vorzuschlagen, welche nicht die Nachteile des Stands der Technik aufweist und weiche insbesondere flexibel für verschiedene Anwendungen verwendbar ist.

Gemäss der vorliegenden Erfindung werden diese Ziele insbeson= dere durch die Elemente der unabhängigen Ansprüche erreicht. Weitere vörteilhafte Ausführungsformen gehen ausserdem aus den abhängigen AnSprüchen und der Beschreibung hervor.

Die computerbasierte Dienstzentrale für die Selektion von Benutzeridentifizierungen und Inhaltsdaten umfasst eine Inhaltsmetadatenbank, eine Benutzerdatenbank und ein Eingangsmodul zum Entgegennehmen von Eingangsdaten, wobei die Inhaltsmetadatenbank Inhaltsmetadaten umfasst, die Informationen über die Inhaltsdaten umfassen, und wobei die Benutzerdatenbank Benutzerdaten umfasst, die den Benutzeridentifizierungen zugeordnete Informationen über Benutzer umfassen.

Die oben genannten Ziele werden durch die vorliegende Erfindung insbesondere dadurch erreicht, dass die computerbasierte Dienstzentrale mit einem Applikationsfilter versehen wird zum Selektieren von applikationsrelevanten Daten auf der Basis einer Applikationsidentifizierung, die durch die entgegengenommenen Eingangsdaten definiert ist, wobei die applikationsrelevanten Daten aus der Inhaltsmetadatenbank selektierte applikationsrelevante Inhaltsmetadaten und aus der Benutzerdatenbank selektierte applikationsrelevante Benutzerdaten umfassen. Die oben genannten Ziele werden durch die vorliegende Erfindung zudem dadurch erreicht, dass die computerbasierte Dienstzentrale mit einem multifunktionalen Datenfilter versehen wird, das mehrere Filterfunktionen umfasst, die abhängig von den entgegengenommenen Eingangsdaten automatisch einschaltbar sind, wobei das multifunktionale Datenfilter Filterfunktionen zum Selektieren der Inhaltsdaten und Filterfunktionen zum Selektieren der Benutzeridentifizierungen jeweils auf der Basis der applikationsrelevanten Daten umfasst, und dass die computerbasierte Dienstzentrale mit einem Ausgangsmodul versehen wird zum Bereitstellen von Ausgangsdaten, die die vom multifunktionalen Datenfilter selektierten Inhaltsdaten oder Benutzeridentifzierungen umfassen. Die Selektion von applikatiorisrelevanten Daten ermöglicht die mengenmässige Reduktion der Inhaltsmetadaten und der Benutzerdaten auf diejenigen Daten, die für die durch die Eingangsdaten definierte Applikation von Belang sind. Dadurch können irrelevante Daten ausgeschieden werden und die für die Ausführung nachfolgender Funktionen benötigte Zeit und notwendigen Ressourcen, insbesondere Rechenzeit und Rechenleistung, können ebenfalls reduziert werden. Das multifunktionale Datenfilter mit Filterfunktionen, die abhängig von den Eingangsdaten automatisch einschaltbar sind, ermöglicht eine flexible und dynamisch konfigurierbare Filterung respektive Selektion von Inhalts- und/oder Benutzerdaten, die automatisch an unterschiedliche Applikationen und unterschiedliche Applikationsparameter angepasst wird.

Das multifunktionale Datenfilter ist eingerichtet, abhängig von den entgegengenommenen Eingangsdaten automatisch mehrere der Filterfunktionen so in Serie zu schalten, dass Daten, die durch eine vorgeschaltete erste Filterfunktion selektiert werden, zur Weiterbehandlung an eine nachgeschaltete zweite Filterfunktion weitergeleitet werden. Dadurch, dass Filterfunktionen des multifunktionalen Datenfilters abhängig von den Eingangsdaten automatisch in Serie geschaltet werden können, wird die automatische Konfiguration mehrstufiger Filter zur Filterung respektive Selektion von Inhalts- und/oder Benutzerdaten ermöglicht. Dies ermöglicht eine modulare Architektur des multifunktionalen Datenfilters, in der mehrere Filtermodule mit jeweils unterschiedlichen Filterfunktionen flexibel und dynamisch gezielt zu einem applikationsspezifischen Datenfilter zusammengeschaltet werden.

Das multifunktionale Datenfilter ist eingerichtet, abhängig von den entgegengenommenen Eingangsdaten automatisch mehrere der Filterfunktionen so parallel zu schalten, dass erste Daten, die durch eine parallel geschaltete erste Filterfunktion selektiert werden, und zweite Daten, die durch eine parallel geschaltete zweite Filterfunktion selektiert werden, aggregiert werden. Dadurch, dass Filterfunktionen des multifunktionalen Datenfilters abhängig von den Eingangsdaten automatisch parallel geschaltet werden können, wird eine flexible und dynamisch konfigurierbare Aggregation der durch mehrere Filterfunktionen selektierten Daten ermöglicht.

Die modulare Architektur des multifunktionalen Datenfilters und die Möglichkeit Filtermodule mit jeweils unterschiedlichen Filterfunktionen flexibel und dynamisch parallel oder in Serie zu schalten ermöglicht die automatische Konfiguration applikationsspezifischer Datenfilter mit komplexen Strukturen, wobei mehrstufige Filtermodule, mit mehreren in Serie geschalteten Filterfunktionen, mit anderen Filtermodulen parallel geschaltet werden können; und wobei Filtermodule mit mehreren parallel geschalteten Filterfunktionen mit anderen Filtermodulen in Serie geschaltet werden können. Die computerbasierte Dienstzentrale umfasst beispielsweise Konfigurationsdaten, die applikationsspezifische Instruktionen zur Konfiguration des multifunktionalen Datenfilters umfassen, und ein Konfigurationsmodul zum automatischen Ein- und Zusammenschalten von Filterfunktionen des multifunktionalen Datenfilters auf der Basis von Konfigurationsdaten, die durch die Applikationsidentifizierung bestimmt sind, die durch die entgegengenommenen Eingangsdaten definiert ist.

In einer Ausführungsvariante umfasst die computerbasierte Dienstzentrale eine Kontextdatenbank mit Benutzerkontextdaten, die benutzerspezifische Informationen über die aktuelle Umgebung der Benutzer umfassen, beispielsweise Informationen über verwendete Endgeräte, über verwendete Kommunikationskanäle und/oder über aktuelle geografische Positionen der Benutzer. Das Applikationsfilter ist entsprechend eingerichtet zum Selektieren von -applikationsrelevanten Daten, die aus der Kontextdatenbank selektierte applikationsrelevante Benutzerkontextdaten umfassen, auf der Basis der durch die entgegengenommenen Eingangsdaten definierten Applikationsidentifizierung. Zudem umfasst das multifunktionale Datenfilter in dieser Ausführungsvariante mehrere Kontextfilterfunktionen, die jeweils abhängig von den entgegengenommenen Eingangsdaten automatisch einschaltbar sind, wobei das multifunktionale Datenfilter Kontextfilterfunktionen zum Selektieren der Inhaltsdaten für eine durch die entgegengenommenen Eingangsdaten definierte Benutzeridentifizierung und Kontextfilterfunktionen zum Selektieren der Benutzerdaten für durch die entgegengenommenen Eingangsdaten definierte Inhaltsdaten jeweils auf der Basis der applikationsrelevanten Daten umfasst. Die Selektion von kontext- und applikationsrelevanten Daten durch Anwendung von Kontextfilterfunktionen und applikationsrelevanten Benutzerkontextdaten auf applikationsrelevante Inhaltsmetadaten und Benutzerdaten ermöglicht die mengenmässige Reduktion der Inhaltsmetadaten und der Benutzerdaten auf diejenigen Daten, die für einen betreffenden Benutzer in seiner aktuellen Umgebung und für die durch die Eingangsdaten definierte Applikation von Belang sind. Dadurch können wiederum irrelevante Daten ausgeschieden und Zeit und Ressourcen eingespart werden. Dadurch dass die Kontextfilterfunktionen abhängig von den entgegengenommenen Eingangsdaten automatisch einschaltbar sind, wird eine flexible und dynamisch konfigurierbare Kontextfilterung ermöglicht, die automatisch an unterschiedliche Applikationen und unterschiedliche Applikationsparameter angepasst wird.

Vorzugsweise umfasst die computerbasierte Dienstzentrale eine Profildatenbank mit Benutzerprofildaten, die benutzerspezifische Informationen über Interessen und Personalien der Benutzer umfassen, und das Applikationsfilter ist eingerichtet zum Selektieren von applikationsrelevanten Daten, die aus der Profildatenbank selektierte applikationsrelevante Benutzerprofildaten umfassen, auf der Basis der durch die entgegengenommenen Eingangsdaten definierten Applikationsidentifizierung. Die Selektion von applikationsrelevanten Benutzerprofildaten ermöglicht die mengenmässige Reduktion von Benutzerprofildaten auf diejenigen Daten, die für die durch die Eingangsdaten definierte Applikation von Belang sind. Dadurch können wiederum irrelevante Daten ausgeschieden und Zeit und Ressourcen eingespart werden.

Vorzugsweise umfasst das multifunktionale Datenfilter mehrere Profilfilterfunktionen, die abhängig von den entgegengenommenen Eingangsdaten automatisch einschaltbar sind, wobei das multifunktionale Datenfilter Profilfilterfunktionen zum Selektieren der Inhaltsdaten für eine durch die entgegengenommenen Eingangsdaten definierte Benutzeridentifizierung und Profilfilterfunktionen zum Selektieren der Benutzeridentifizierungen für durch die entgegengenommenen Eingangsdaten definierte Inhaltsdaten jeweils auf der Basis der applikationsrelevanten Daten umfasst. Durch die automatische Zuschaltung von Profilfilterfunktionen in Abhängigkeit der Eingangsdaten können für Benutzeridentifizierungen, die durch die Eingangsdaten definiert sind, auf der Basis der applikationsrelevanten Daten, das heisst unter Verwendung der applikatiohsreievahteh Inhaltsmetadaten und der applikationsrelevanten Benutzerdaten, insbesondere der applikationsrelevanten Benutzerprofildaten, Inhaltsdaten selektiert werden, die für den durch die Benutzeridentifizierung bestimmten Benutzer relevant sind. Für Inhaltsdaten, die durch die Eingangsdaten definiert sind, können durch die automatische Zuschaltung von Proflfilterfunktionen auf der Basis der applikationsrelevanten Daten, das heisst unter Verwendung der applikationsrelevanten Inhaltsmetadaten und der applikationsrelevanten Benutzerdaten, insbesondere der applikationsrelevanten Benutzerprofildaten, Benutzeridentifizierungen selektiert werden, die Benutzer bestimmen, für die die durch die Eingangsdaten definierten Inhaltsdaten relevant sind.

In einer Ausführungsvariante umfasst das multifunktionale Datenfilter eine Benutzerclusterfilterfunktion, die abhängig von den entgegengenommenen Eingangsdaten automatisch einschaltbar ist und die eingerichtet ist zum Selektieren von Benutzeridentifizierungen auf der Basis applikationsrelevanter Benutzerprofildaten, die mit applikationsrelevanten Benutzerprofildaten korrelieren, die einer Benutzeridentifizierung zugeordnet sind, die durch vorgeschaltete Filterfunktionen selektiert oder durch die Eingangsdaten definiert ist. Durch die automatische Zuschaltung der Benutzerclusterfilterfunktion in Abhängigkeit der Eingangsdaten können Benutzeridentifizierungen von Benutzern selektiert werden, deren applikationsrelevante Benutzerprofildaten mit applikationsrelevanten Benutzerprofildaten korrelieren, die der Benutzeridentifizierung zugeordnet sind, die durch vorgeschaltete Filterfunktionen selektiert oder durch die Eingangsdaten definiert ist. Einfacher ausgedrückt bedeutet dies, dass durch die Benutzerclusterfilterfunktion Benutzer mit ähnlichen applikationsrelevanten Benutzerprofildaten bestimmt werden können. Durch Vorschalten der Benutzerclusterfilterfunktion vor ein Filter zur Selektion von Inhaltsdaten, können für einen Benutzer auch Inhaltsdaten selektiert werden, die für Benutzer mit ähnlichen Benutzerprofildaten relevant sind.

In einer Ausführungsvariante umfasst das multifunktionale Datenfilter eine Inhaltsclusterfilterfunktion, die abhängig von den entgegengenommenen Eingangsdaten automatisch einschaltbar ist und die eingerichtet ist zum Selektieren von Inhaltsdaten auf der Basis applikationsrelevanter Inhaltsmetadaten, die mit applikationsrelevanten Inhaltsmetadaten korrelieren, die Inhaltsdaten zugeordnet sind, die durch vorgeschaltete Filterfunktionen selektiert oder durch die Eingangsdaten definiert sind. Durch die automatische Zuschaltung der Inhaltsclusterfilterfunktion in Abhängigkeit der Eingangsdaten können Inhaltsdaten selektiert werden, deren applikationsrelevante Inhaltsmetadaten mit applikationsrelevanten Inhaltsmetadaten korrelieren, die Inhaltsdaten zugeordnet sind, die durch vorgeschaltete Filterfunktionen selektiert oder durch die Eingangsdaten definiert sind. Einfacher ausgedrückt bedeutet dies, dass durch die Inhaltsclusterfilterfunktion Inhaltsdaten mit ähnlichen applikationsrelevanten Inhaltsmetadaten bestimmt werden können. Durch Vorschalten der Inhaltsclusterfilterfunktion vor ein Filter zur Selektion von Benutzeridentifzierungen, können für Inhaltsdaten auch Benutzeridentifizierungen von Benutzern selektiert werden, für die Inhaltsdaten mit ähnlichen Inhaltsmetadaten relevant sind.

Vorzugsweise ist das Ausgangsmodul eingerichtet, die vom multifunktionalen Datenfilter selektierten Inhaltsdaten über ein Telekommunikationsnetz an den Benutzer zu übermitteln, der durch die entgegengenommenen Eingangsdaten definiert ist, und das Ausgangsmodul ist eingerichtet, die Inhaltsdaten, die durch die entgegengenommenen Eingangsdaten definiert sind, über ein Telekommunikationsnetz an die durch die selektierten Benutzeridentifizierungen definierten Benutzer zu übermitteln; Dadurch können Inhaltsdaten, die für einen durch die entgegengenommenen Eingangsdaten definierten Benutzer selektiert wurden, an diesen Benutzer übermittelt werden und Inhaltsdaten für die Benutzer selektiert wurden, für die die Inhaltsdaten relevant sind, können an diese selektierten Benutzer übermittelt werden.

Die vorliegende Erfindung bezieht sich auch auf ein Computerprogrammprodukt, das ein computerlesbares Medium umfasst, worin Computerprogrammcodemittel zur Steuerung eines oder mehrerer Prozessoren der computerbasierten Dienstzentrale enthalten sind.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch eine computerbasierte Dienstzentrale mit einem konfigurierbaren multifunKtionalen Datenfilter illustriert, die mit Telekommunikationsnetzen verbunden ist.
Figur 2 zeigt ein Blockdiagramm, welches schematisch eine Konfiguration des multifunktionalen Datenfilters für die Selektion von Inhaltsdaten für einen bestimmten Benutzer illustriert.
Figur 3 zeigt ein Blockdiagramm, welches schematisch eine Konfiguration des multifunktionalen Datenfilters für die Selektion von Benutzeridentifizierungen für bestimmte Inhaltsdaten illustriert:

### Wege zur Ausführung der Erfindung

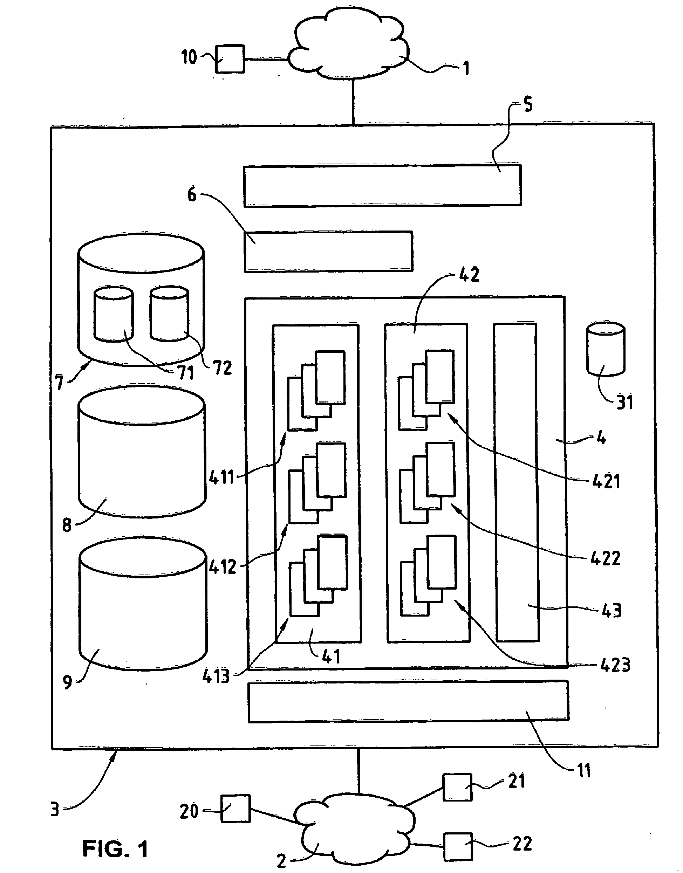

In den Figuren 1, 2 und 3 werden einander entsprechende, gleiche Komponenten durch gleiche Bezugszeichen bezeichnet:

In der Figur 1 bezeichnen die Bezugszeichen 1 und 2 ein Tetekommunikationsnetz, über das Kommunikationsendgeräte 10 respektive 20, 21, 22 mit der computerbasierten Dienstzentrale 3 kommunizieren, das heisst Daten austauschen, können. Die Telekommunikationsnetze 1, 2 umfassen Festnetze und Mobilfunknetze. Die Festnetze umfassen beispielsweise öffentliche geschaltete Telefonnetze, ISDN-Netze (Integrated Services Digital Network) oder LAN- oder WAN-Netze (Local Area Network respektive Wide Area Network). Die Mobilfunknetze umfassen beispielsweise Mobilfunktelefonnetze wie GSM- (Global System for Mobile Communication) oder UMTS-Netze (Universal Mobile Telecommunication System) oder WLAN-Netze (Wireless Local Area Networks).

Die Kommunikationsendgeräte 10, 20, 21, 22 sind beispielsweise Mobilfunktelefone, PDA-Endgeräte (Personal Digital Assistant), Laptop-, Palmtop- oder Personal Computers oder so genannte Set-Top Boxes für Fernsehgeräte, die KommuniKationsmodule für die Datenkommunikation über die Telekommunikationsnetze 1 respektive 2 umfassen.

Die computerbasierte Dienstzentrale 3 umfasst einen oder mehrere Computer sowie ein Eingangsmodul 5 und ein Ausgangsmodul 11 mit Hard- und Softwaremodulen für den Datenaustausch über die Telekommunikationsnetze 1, 2 mit den Kommunikationsendgeräten 10, 20, 21, 22. Das Eingangsmodul 5 ist eingerichtet, um Eingangsdaten vom Kommunikationsendgerät 10 über das Telekommunikationsnetz 1 entgegenzunehmen. Das Ausgangsmodul 11 ist eingerichtet, um Ausgangsdaten bereitzustellen und über das Telekommunikationsnetz 2 an eines oder mehrere der Kommunikationsendgeräte 20, 21 22 zu übermitteln. Die Ausgangsdaten können vom Ausgangsmodul 11 auch über das Telekommunikationsnetz 1 an das Kommunikationsendgerät 10 übermittelt werden.

Die computerbasierte Dienstzentrale 3 umfasst zudem eine Benutzerdatenbank 7, eine Inhaltsmetadatenbank 8 und eine Inhaltsdatenbank 9, die auf einem gemeinsamen Computer oder auf verschiedenen Computers ausgeführt sind.

Die Inhaltsdatenbank 9 umfasst Inhaltsdaten mit Datenobjekten und zugeordneten Objektidentifizierungen. Die Datenobjekte umfassen insbesondere Multimediadatenobjekte mit digitalen Textdaten, Grafikdaten, Bilddaten, Audiodaten und/oder Videodaten und Computerprogrammobjekte. Der Fachmann wird verstehen, dass die Inhaltsdatenbank 9 als File-Server ausgeführt werden kann.

Die Inhaltsmetadatenbank 8 umfasst Inhaltsmetadaten mit Informationen über die Inhaltsdaten. Die Informationen über die Inhaltsdaten umfassen jeweils eine Objektidentifizierung des betreffenden Datenobjekts sowie Inhaltsangaben über das Datenobjekt mit einer Klassifizierung und Beschreibung, beispielsweise in Form einer hierarchisch strukturierten Klassifizierung, technische Angaben über das Datenobjekt, beispielsweise Datentyp (Audio, Video, Text, Grafik, Programm, ...), Datengrösse, erforderliche Anzeigegrösse, Prozessorleistung oder Übertragungskapazität, sowie Zugriffsbedingungen für das Datenobjekt oder Angaben über ein geografisches Gebiet, in welchem das Datenobjekt verfügbar oder relevant ist.

Die Benutzerdatenbank 7 umfasst Benutzerdaten mit Benutzeridentifizierungen und zugeordneten Informationen über Benutzer. Die Benutzerdatenbank 7 umfasst eine Kontextdatenbank 71 und eine Profildatenbank 72. Die Kontextdatenbank 71 umfasst Benutzerkontextdaten mit Benutzeridentifizierungen und zugeordneten Informationen über die aktuelle Umgebung der Benutzer. Die Profildatenbank 72 umfasst Benutzerprofildaten mit Benutzeridentifizierungen und zugeordneten Informationen über Interessen und Personalien der Benutzer.

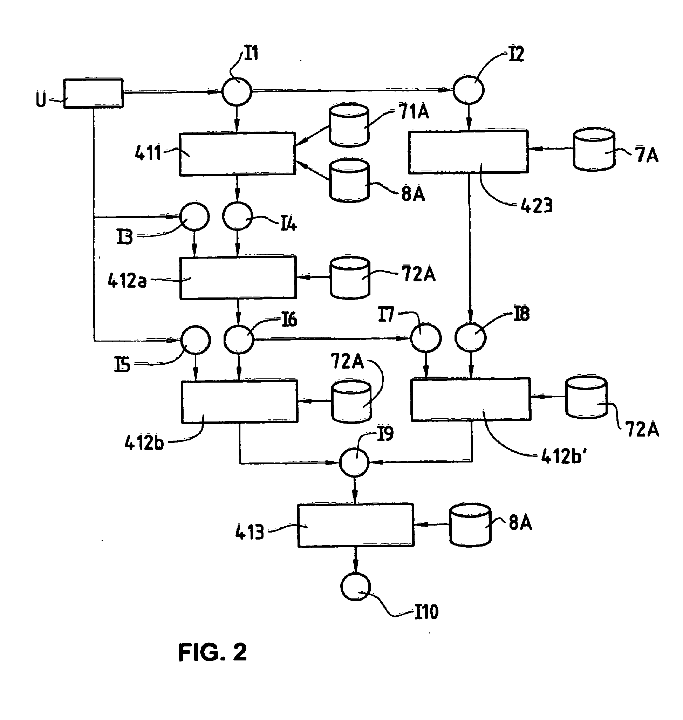

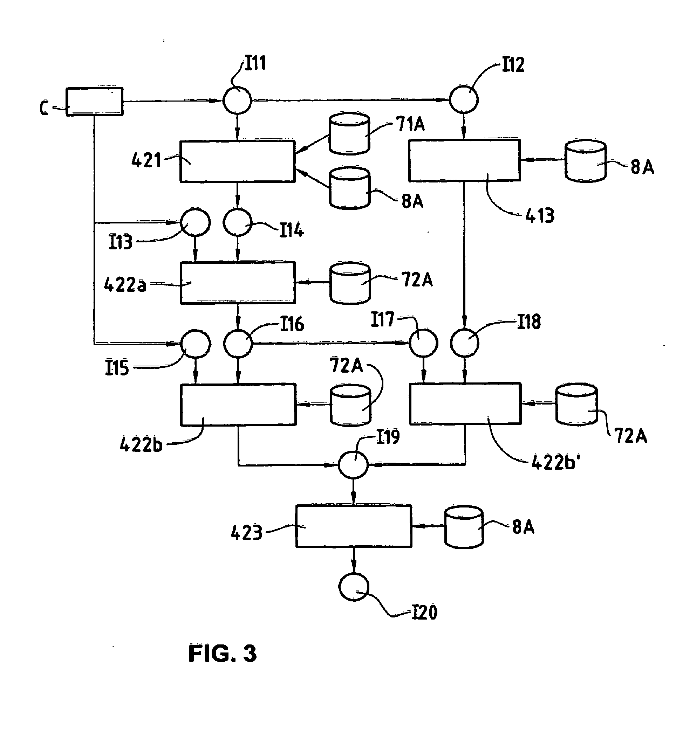

Die computerbasierte Dienstzentrale 3 umfasst weiter ein Applikationsfilter 6, das vorzugsweise als programmiertes Softwaremodul ausgeführt ist. Das Applikationsfilter 6 entnimmt den durch das Eingangsmodul 5 entgegengenommenen Eingangsdaten Angaben zur Identifizierung einer Applikation, beispielsweise eine Applikationsidentifizierung in Form eines Applikationscodes oder eines Applikationsnamens. Auf der Basis der entnommenen Applikationsidentifizierung selektiert das Applikationsfilter 6 applikationsrelevante Daten, insbesondere applikationsrelevante Benutzerdaten aus der Benutzerdatenbank 7 und applikationsrelevante Inhaltsmetadaten aus der Inhaltsmetadatenbank 8. Die applikationsrelevanten Inhaltsmetadaten werden in den Figuren 2 und 3 mit dem Bezugszeichen 8A bezeichnet. Die applikationsrelevanten Benutzerdaten umfassen applikationsrelevante Benutzerkontextdaten aus der Kontextdatenbank 71, die in den Figuren 2 und 3 mit dem Bezugszeichen 71A bezeichnet werden, und applikationsrelevante Benutzerprofildaten aus der Profildatenbank 72, die in den Figuren 2 und 3 mit dem Bezugszeichen 72A bezeichnet werden.

Die computerbasierte Dienstzentrale 3 umfasst weiter ein multifunktionales Datenfilter 4, das vorzugsweise als programmiertes Softwaremodul ausgeführt ist. Das multifunktionale Datenfilter 4 umfasst Filterfunktionen 41 zum Selektieren von Inhaltsdaten, Filterfunktionen 42 zum Selektieren von Benutzeridentifizierungen und ein Konfigurationsmodul 43. Die Filterfunktionen 41 zum Selektieren von Inhaltsdaten umfassen KöriteXtfilterfunktionen 411 zum Selektieren von Inhaltsdaten, Profilfilterfunktionen 412, 412a, 412b, 412b' zum Selektieren von Inhaltsdaten und Inhaltsclusterfilterfunktionen 413. Die Filterfunktionen 42 zum Selektieren von Benutzeridentifizierungen umfassen Kontextfilterfunktionen 421 zum Selektieren von Benutzerdaten, Profilfilterfunktionen 422, 422a, 422b, 422b' zum Selektieren von Benutzeridentifzierungen und Benutzerclusterfilterfunktionen 423.

Das Konfigurationsmodul 43 entnimmt den durch das Eingangsmodul 5 entgegengenommenen Eingangsdaten die Applikationsidentifizierung und einen oder mehrere Applikationsparameter, insbesondere eine Benutzeridentifizierung oder eine Identifizierung von Inhaltsdaten, beispielsweise eine Objektidentifizierung. Auf der Basis der entnommenen Applikationsidentifizierung selektiert das Konfigurationsmodul 43 applikationsrelevante Konfigurationsdaten 31, die in der computerbasierten Dienstzentrale 3 gespeichert sind. Die Konfigurationsdaten 31 umfassen applikatiorisspezifische Instruktionen zur Konfiguration des multifunktionalen Datenfilters 4. Die Konfigurationsinstruktionen entsprechen unterschiedlichen applikationsspezifischen Anleitungen oder Schaltplänen zur Verknüpfung der Filterfunktionen 41 zum Selektieren von Inhaltsdaten und der Filterfunktionen 42 zum Selektieren von Benutzeridentifizierungen, was später beispielhaft mit Bezug zu den Figuren 2 und 3 näher beschrieben wird. Die Konfigurationsdaten 31 umfassen Konfigurationsinstruktionen, die bewirken, dass mehrere der Filterfunktionen 41, 42 automatisch ausgewählt und in Serie geschaltet werden, so dass Daten, die durch eine vorgeschaltete erste Filterfunktion 41, 42 selektiert werden, zur Weiterbehandlung an eine nachgeschaltete zweite Filterfunktion 41, 42 weitergeleitet werden. Die Konfigurationsdaten 31 umfassen auch Konfigurationsinstruktionen, die bewirken, dass automatisch mehrere der Filterfunktionen 41, 42 ausgewählt und parallel geschaltet werden, so dass erste Daten, die durch eine parallel geschaltete erste Filterfunktion 41, 42 selektiert werden, und zweite Daten, die durch eine parallel geschaltete zweite Filterfunktion 41, 42 selektiert werden, aggregiert werden.

Die Kontextfilterfunktionen 411 selektieren für einen Benutzer diejenigen Inhaltsdaten, die in seiner aktuellen Umgebung verfügbar und zugreifbar sind und wiedergegeben werden können. Dazu vergleichen die Kontextfilterfunktionen 411 die applikationsrelevanten Benutzerkontextdaten 71A, die der aus den Eingangsdaten entnommenen Benutzeridentifizierung zugeordnet sind, mit den applikationsrelevanten Inhaltsmetadaten 8A. Die Kontextfilterfunktionen 411 selektieren die Inhaltsdaten durch Bestimmen derjenigen Objektidentifizierungen in den applikationsrelevanten Inhaltsmetadaten 8A, deren zugeordnete technischen Angaben und Angaben über ein geografisches Gebiet, mit den entsprechenden durch die Eingangsdaten bestimmten applikationsrelevanten Benutzerkontextdaten 71A übereinstimmen.

Die Profilfilterfunktionen 412, 412a, 412b, 412b' selektieren für einen oder mehrere Benutzer, die durch vorgeschaltete Filterfunktionen selektiert oder durch die Eingangsdaten definiert sind, diejenigen Inhaltsdaten, die den Benutzerprofilen dieser Benutzer entsprechen. Dazu vergleichen die Profilfilterfunktionen 412, 412a, 412b, 412b' die applikationsrelevanten Benutzerprofildaten 72A, die der oder den betreffenden Benutzeridentifizierung/en zugeordnet ist/sind, mit den applikationsrelevanten Inhaltsmetadaten 8A. Abhängig von ihrem Filtertyp selektieren die Profilfilterfunktionen 412, 412a, 412b, 412b' die Inhaltsdaten durch Bestimmen derjenigen Objektidentifizierungen in den applikationsrelevanten Inhaltsmetadaten 8A, deren zugeordnete Inhaltsangaben mit den applikationsrelevanten Benutzerprofildaten 72A übereinstimmen (Interesse, Vorliebe) oder nicht übereinstimmen (Desinteresse, Abneigung).

Die Inhaltsclusterfilterfunktionen 413 selektieren für bestimmte erste Inhaltsdaten, die durch vorgeschaltete Filterfunktionen selektiert oder durch die Eingangsdaten definiert sind, ähnliche oder entsprechende weitere zweite Inhaltsdaten. Dazu vergleichen die Inhaltsclusterfilterfunktionen 413 Inhaltsmetadaten, die den ersten Inhaltsdaten zugeordnet sind, mit den applikationsrelevanten Inhaltsmetadaten 8A. Die Inhaltsclusterfilterfunktionen 413 selektieren die weiteren zweiten Inhaltsdaten durch Bestimmen derjenigen Objektidentifizierungen in den applikationsrelevanten Inhaltsmetadaten 8A, deren zugeordnete Inhaltsangaben, technische Angaben und Angaben über ein geografisches Gebiet mit den entsprechenden Informationen der Inhaltsmetadaten korrelieren, die den ersten Inhaltsdaten zugeordnet sind.

Die Kontextfilterfunktionen 421 selektieren für Inhaltsdaten diejenigen Benutzer, die in ihrer aktuellen Umgebung auf die Inhaltsdaten zugreifen können und die Inhaltsdaten auf ihren Kommunikationsendgeräten wiedergeben können. Dazu vergleichen die Kontextfilterfunktionen 421 die applikationsrelevanten Inhaltsmetadaten 8A, die den durch die Eingangsdaten definierten Inhaltsdaten zugeordnet sind, mit den applikationsrelevanten Benutzerkontextdaten 71A. Die Kontextfilterfunktionen 421 selektieren die Benutzer durch Bestimmen derjenigen Benutzeridentifizierungen, deren zugeordnete applikationsrelevante Benutzerkontextdaten 71A mit den technischen Angaben und den Angaben über ein geografisches Gebiet übereinstimmen, die den durch die Eingangsdaten definierten applikationsrelevanten Inhaltsmetadaten 8A zugeordnet sind.

Die Profilfilterfunktionen 422, 422a, 422b, 422b' selektieren für ausgewählte Inhaltsdaten, die durch vorgeschaltete Filterfunktionen selektiert oder durch die Eingangsdaten definiert sind, Benutzer mit Benutzerprofilen, denen die ausgewählten Inhaltsdaten entsprechen. Dazu vergleichen die Profilfilterfunktionen 422, 422a, 422b, 422b' die applikationsrelevanten Inhaltsmetadaten 8A, die den ausgewählten Inhaltsdaten zugeordnet sind, mit den applikationsrelevanten Benutzerprofildaten 72A. Abhängig von ihrem Filtertyp selektieren die Profilfilterfunktionen 422, 422a, 422b, 422b' die Benutzer durch Bestimmen derjenigen Benutzeridentifizierungen, deren zugeordnete applikationsrelevante Benutzerprofildaten 72A mit den applikationsrelevanten Inhaltsmetadaten 8A der ausgewählten Inhaltsdaten übereinstimmen (Interesse, Vorliebe) oder nicht übereinstimmen (Desinteresse, Abneigung):

Die Benutzerclusterfilterfunktionen 423 selektieren für bestimmte erste Benutzer, die durch vorgeschaltete Filterfunktionen selektiert oder durch die Eingangsdaten definiert sind, ähnliche oder entsprechende weitere zweite Benutzer. Dazu vergleichen die Benutzerclusterfilterfunktionen 423 Benutzerdaten, die den ersten Benutzern zugeordnet sind, mit den applikationsrelevanten Benutzerdaten 7A. Die Benutzerdusterfiiterfünktionen 423 selektieren die weiteren zweiten Benutzer durch Bestimmen derjenigen Benützeridentifizierungen in den applikationsrelevanten Benutzerdaten 7A, deren zugeordnete applikationsrelevante Benutzerkontextdaten und applikationsrelevante Benutzerprofildaten mit den Benutzerkontextdaten und Benutzerprofildaten korrelieren, die den ersten Benutzern zugeordnet sind.

In der Figur 2 ist ein Beispiel einer Konfiguration des multifunktionalen Datenfilters 4 für die Selektion von Inhaltsdaten für einen Benutzer illustriert, der durch eine aus den Eingangsdaten entnommene Benutzeridentifizierung U definiert ist. Die in der Figur 2 illustrierte Konfiguration des multifunktionalen Datenfilters 4 wird beispielsweise in einer Applikation "Filmtipp" verwendet, in welcher einem Benutzer Inhaltsdaten betreffend Filme übermittelt werden, die für ihn relevant und von Interesse sind.

In der Konfiguration des multifunktionalen Datenfilters 4 gemäss der Figur 2 wird die Benutzeridentifizierung U über die Schnittstellenpunkte 11, 12, 13 und 15 der Kontextfilterfuriktiön 411, der Benutzerclusterfilterfunktion 423, der Profilfilterfunktion 412a und der Profilfilterfunktion 412b zugeführt.

Die Kontextfilterfunktion 411 selektiert, wie oben beschrieben, Inhaltsdaten, die dem durch die Benutzeridentifzierung U bestimmten Benutzer in seiner aktuellen Umgebung zugänglich gemacht und auf seinem Kommunikationsendgerät 10, 20, 21, 22 wiedergegeben werden können und die für das geografische Gebiet, wo sich dieser Benutzer momentan aufhält, relevant sind.

Der Ausgang der Kontextfilterfunktion 411 ist über den Schnittstellenpunkt 14 mit der Profilfiltertunktion 412a verbunden. Die von der Kontextfitterfunktion 411 selektierten Inhaltsdaten, die durch eine oder mehrere Identifizierungen definiert sind, werden über den Schnittstellenpunkt 14 der Profilfilterfunktion 412a zugeführt.

Die Profilfilterfunktion 412a selektiert , wie oben beschrieben, für den durch die Benutzeridentifzierung U bestimmten Benutzer aus den über den SchnittstellenpunKt 14 entgegengenommen Inhaltsdaten diejenigen Inhaltsdaten aus, an denen der Benutzer nicht desinteressiert oder nicht abgeneigt ist.

Der Ausgang der Profilfilterfunktion 412a ist über den Schnittstellenpunkt 16 mit der Profilfilterfunktion 412b verbunden. Die von der Profilfilterfunktion 412a selektierten Inhaltsdaten, die durch eine oder mehrere Identifizierungen definiert sind, werden über den Schnittstellenpunkt 16 der Profiflterfunktion 412b zugeführt.

Die Profilfilterfunktion 412b selektiert, wie oben beschrieben, für den durch die Benutzeridentifizierung U bestimmten Benutzer aus den über den Schnittstellenpunkt 16 entgegengenommen Inhaltsdaten diejenigen Inhaltsdaten, an denen der Benutzer interessiert ist.

Die Benutzerclusterfilterfunktion 423 selektiert, wie oben beschrieben, durch Benutzeridentifizierungen definierte Benutzer, die dem durch die Benutzeridentifizierung U bestimmten Benutzer ähnlich sind.

Der Ausgang der Benutzerclusterfilterfunktion 423 ist über den Schnittstellenpunkt 18 mit der Profilfilterfunktion 412b' verbunden. Zudem ist der Ausgang der Profilfilterfunktion 412a über den Schnittstellenpunkt 17 mit der Profilfilterfunktion 412b' verbunden.

Die Profilfilterfunktion 412b' selektiert, wie oben beschrieben, aus den über den Schnittstellenpunkt 17 entgegengenommen Inhaltsdaten, an denen der durch die Benutzeridentifizierung U definierte Benutzer nicht desinteressiert ist, diejenigen Inhaltsdaten aus, an denen die durch die Benutzerclusterfilterfunktion 423 selektierten und über den Schnittstellenpunkt 18 entgegengenommen Benutzer interessiert sind.

Sowohl der Ausgang der Profilfilterfunktion 412b als auch der Ausgang der Profilfilterfunktion 412b' sind über den Schnittstellenpunkt 19 mit der Inhaltsclusterfiltertunktion 413 verbunden.

Die Inhaltsclusterfilterfunktion 413 selektiert, wie oben beschrieben, Inhaltsdaten, die den durch die Profilfilterfunktion 412b und durch die Profilfilterfunktion 412b' selektierten Inhaltsdaten ähnlich sind.

Die für den durch die Benutzeridentifizierung U definierten Benutzer selektierten Inhaltsdaten, die durch eine oder mehrere Identifizierungen definiert sind, stehen am Ausgang der Inhaltsclusterfilterfunktion 413 im Schnittstellenpunkt 110 zum Weiterleiten an das Ausgangsmodul 11 zur Verfügung.

In der Figur 3 ist ein Beispiel einer Konfiguration des multifunktionalen Datenfilters 4 illustriert, die geeignet ist, für die Selektion von möglichen Benutzern von Inhaltsdaten, die durch eine aus den Eingangsdaten entnommene Inhaltsidentifizierung C definiert sind. Die in der Figur 3 illustrierte Konfiguration des multifunktionalen Datenfilters 4 wird beispielsweise in einer Applikation "Datenvertrieb" verwendet, in welcher Inhaltsdaten an Benutzer übermittelt werden, die sich für die Inhaltsdaten interessieren.

In der Konfiguration des multifunktionalen Datenfilters 4 gemäss der Figur 3 wird die Inhaltsidentifizierung C über die Schnittstellenpunkte I11, I12, I13 und I15 der Kontextfilterfunktion 421, der Inhaltsclusterfilterfunktion 413, der Profilfilterfunktion 422a und der Profilfilterfunktion 422b zugeführt.

Die Kontextfilterfunktion 421 selektiert, wie oben beschrieben, Benutzer, für die die durch die Inhaltsidentifizierung C bestimmten Inhaltsdaten im geografischen Gebiet, wo sich die betreffenden Benutzer momentan aufhalten, relevant sind und welchen Benutzern diese Inhaltsdaten in ihrer aktuellen Umgebung zugänglich gemacht und auf ihren Kommunikationsendgeräten 10,20.21, 22 wiedergegeben werden können.

Der Ausgang der Kontextfilterfunktion 421 ist über den Schnittstellenpunkt I14 mit der Profilfilterfunktion 422a verbunden. Die von der Kontextfilterfunktion 421 selektierten Benutzer, die durch eine oder mehrere Benutzeridentifizierungen definiert sind, werden über den Schnittstellenpunkt I14 der Profilfilterfunktion 422a zugeführt.

Die Profilfilterfunktion 422a Selektiert, wie oben beschrieben, aus den über den Schnittstellenpunkt 114 entgegengenommen Benutzern, diejenigen, die an den durch die Inhaltsidentifizierung C bestimmten Inhaltsdaten nicht desinteressiert oder nicht abgeneigt sind.

Der Ausgang der Profilfilterfunktion 422a ist über den Schnittstellenpunkt 116 mit der Profilfilterfunktion 422b verbunden. Die von der Profilfilterfunktion 422a selektierten Benutzer, die durch eine oder mehrere Benutzeridentifizierungen definiert sind, werden über den Schnittstellenpunkt 116 der Profilfilterfunktion 422b zugeführt.

Die Profilfilterfunktion 422b selektiert, wie oben beschrieben, aus den über den Schnittstellenpunkt 116 entgegengenommen Benutzern, diejenigen, die an den durch die Inhaltsidentifizierung C bestimmten Inhaltsdaten interessiert sind.

Die Inhaltsclusterfilterfunktion 413 selektiert, wie oben beschrieben, durch Inhaltsidentifizierungen definierte Inhaltsdaten, die den durch die Inhaltsidentifizierung C bestimmten Inhaltsdaten ähnlich sind.

Der Ausgang der Inhaltsclusterfilterfunktion 413 ist über den Schnittstellenpunkt 118 mit der Profilfilterfunktion 422b' verbunden. Zudem ist der Ausgang der Profilfilterfunktion 422a über den Schnittstellenpunkt 117 mit der Profilfilterfunktion 422b' verbunden.

Die Profilfilterfunktion 422b' selektiert, wie oben beschrieben, aus den über den Schnittstellenpunkt I17 entgegengenommen Benutzern, die an den durch die Inhaltsidentifizierung C definierten Inhaltsdaten nicht desinteressiert sind, diejenigen Benutzer, die an den durch die Inhaltsclusterfilterfunktion 413 selektierten und über den Schnittstellenpunkt I18 entgegengenommen Inhaltsdaten interessiert sind.

Sowohl der Ausgang der Profilfilterfunktion 422b als auch der Ausgang der Proflflterfunktion 422b' sind über den Schnittstellenpunkt 119 mit der Benutzerclusterfilterfunktion 423 verbunden.

Die Benutzerclusterfilterfunktion 423 selektiert, wie oben beschrieben, Benutzer, die den durch die Profilfilterfuriktiöri 422b und durch die Profilfilterfunktion 422b' selektierten Benutzern ähnlich sind.

Die für den durch die lnhaltsidentifizierung C definierten Inhaltsdaten selektierten Benutzer, die durch eine oder mehrere Benutzeridentifizierungen definiert sind, stehen am Ausgang der Benutzerdusterfiiterfunktiön 423 im Schnittstellenpunkt 120 zum Weiterleiten an das Ausgangsmodul 11 zur Verfügung.

## Patentansprüche

1. Computerbasierte Dienstzentrale (3) für die Selektion von Benutzeridentifizierungen und Inhaltsdaten, umfassend:
eine Inhaltsmetadatenbank (8) mit Inhaltsmetadaten, die Informationen über die Inhaltsdaten umfassen,
eine Benutzerdatenbank (7) mit Benutzerdaten, die den Benutzeridentifizierurigen zugeordnete Informationen über Benutzer umfassen,
ein Eingangsmodul (5) zum Entgegennehmen von Eingangsdaten, welche aus einer Applikationsidentifizierung und einer Benutzeridentifizierung bzw. aus einer Applikationsidentifizierung und einer Inhaltsidentifizierung bestehen,
ein Applikationsfilter (6) zum Selektieren von applikationsrelevanten Daten auf der Basis einer entgegengenommenen Applikationsidentifizierung, wobei die applikationsrelevanten Daten aus der Inhaltsmetadatenbank (8) selektierte applikationsrelevante Inhaltsmetadaten (8A) und aus der Benutzerdatenbank(7) selektierte applikationsrelevante Benutzerdaten (7a) umfassen,
ein multifunktionales Datenfilter (4), das Filterfunktionen (41) zum Selektieren der Inhaltsdaten und Filterfunktionen (42) zum Selektieren der Benutzeridentifizierungen jeweils auf der Basis von applikationsrelevanten Daten umfasst, die sich abhängig von der entgegengenommenen Applikationsidentifizierung automatisch in Serie und parallel schalten lassen, sodass
mehrere der Filterfunktionen so in Serie geschaltet sind, dass Daten, die durch eine vorgeschaltete erste Filterfunktion selektiert werden, zur Weiterbehandlung an eine nachgeschaltete zweite Filterfunktion weitergeleitet werden, und/oder
mehrere der Filterfunktionen so parallel geschaltet sind, dass erste Daten, die durch eine parallel geschaltete erste Filterfunktion selektiert werden, und zweite Daten, die durch eine parallel geschaltete zweite Filterfunktion selektiert werden, aggregiert werden,
ein Ausgangsmodul (11) zum Bereitstellen von Ausgangsdaten, die die vom multifunktionalen Datenfilter (4) selektierten Inhaltsdaten oder Benutzeridentifizierungen umfassen.

2. Computerbasierte Dienstzentrale (3) nach Anspruch 1, **dadurch gekennzeichnet, dass** sie eine Kontextdatenbank (71) umfasst mit Benutzerkontextdaten, die benutzerspezifische Informationen über die aktuelle Umgebung der Benutzer umfassen, dass das Applikationsfilter (6) eingerichtet ist zum Selektieren von applikationsrelevanten Daten, die aus der Kontextdatenbank (71) selektierte applikationsrelevante Benutzerkontextdaten (71A) umfassen, auf der Basis der durch die entgegengenommenen Eingangsdaten definierten Applikationsidentifizierung, und dass das multifunktionale Datenfilter (4) mehrere Kontextfilterfunktionen (411, 421) umfasst, die sich jeweils abhängig von den entgegengenommenen Eingangsdaten automatisch einschalten, wobei das multifunktionale Datenfilter (4) Kontextfilterfunktionen (411) zum Selektieren der Inhaltsdaten für eine durch die entgegengenommenen Eingangsdaten definierte Benutzeridentifizierung (U) und Kontextfilterfunktionen (421) zum Selektieren der Benutzerdaten für durch die entgegengenommenen Eingangsdaten definierte Inhaltsdaten jeweils auf der Basis der applikationsrelevanten Daten umfasst.

3. Computerbasierte Dienstzentrale (3) nach einem der Ansprüche 1 bis 2, **dadurch gekennzeichnet, dass** sie eine Profildatenbank (72) umfasst mit Benutzerprofildaten, die benutzerspezifische Informationen über Interessen und Personalien der Benutzer umfassen, und dass das Applikationsfilter (6) eingerichtet ist zum Selektieren von applikationsrelevanten Daten, die aus der Profildatenbank (72) selektierte applikationsrelevante Benutzerprofildaten (72A) umfassen, auf der Basis der durch die entgegengenommenen Eingangsdaten definierten Applikationsidentifizierung.

4. Computerbasierte Dienstzentrale (3) nach Anspruch 3, **dadurch gekennzeichnet, dass** das multifunktionale Datenfilter (4) mehrere Profilfilterfunktionen (412, 422) umfasst, die sich abhängig von den entgegengenommenen Eingangsdaten automatisch einschalten, wobei das multifunktionale Datenfilter (4) Profilfilterfunktionen (412, 412a, 412b, 412b') zum Selektieren der Inhaltsdaten für eine durch die entgegengenommenen Eingangsdaten definierte Benutzeridentifizierung (U) und Profilfilterfunktionen (422, 422a, 422b, 422b') zum Selektieren der Benutzeridentifizierungen für durch die entgegengenommenen Eingangsdaten definierten Inhaltsdaten jeweils auf der Basis der applikationsrelevanten Daten umfasst.

5. Computerbasierte Dienstzentrale (3) nach einem der Ansprüche 3 oder 4, **dadurch gekennzeichnet, dass** das multifunktionale Datenfilter (4) eine Benutzerclusterfilterfunktion (423) umfasst, die sich abhängig von den entgegengenommenen Eingangsdaten automatisch einschaltet und die eingerichtet ist zum Selektieren von Benutzeridentifizierungen auf der Basis applikationsrelevanter Benutzerprofildaten (72A), die mit solchen applikationsrelevanten Benutzerprofildaten (72A) korrelieren, die einer durch vorgeschaltete Filterfunktionen selektierten oder durch die Eingangsdaten definierten Benutzeridentifizierung zugeordnet sind.

6. Computerbasierte Dienstzentrale (3) nach einem der Ansprüche 1 bis 5, **dadurch gekennzeichnet, dass** das multifunktionale Datenfilter (4) eine Inhaltsclusterfilterfunktion (413) umfasst, die sich abhängig von den entgegengenommenen Eingangsdaten automatisch einschaltet und die eingerichtet ist zum Selektieren von Inhaltsdaten auf der Basis applikationsrelevanter Inhaltsmetadaten (8A), die mit solchen applikationsrelevanten Inhaltsmetadaten (8A) korrelieren, die durch vorgeschaltete Filterfunktionen selektierten oder durch die Eingangsdaten definierten Inhaltsdaten zugeordnet sind.

7. Computerbasierte Dienstzentrale (3) nach einem der Ansprüche 1 bis 6, **dadurch gekennzeichnet, dass** sie Konfigurationsdaten umfasst, die applikationsspezifische Instruktionen zur Konfiguration des multifunktionalen Datenfilter (4)s umfassen, und dass sie ein Konfigurationsmodul umfasst zum automatischen Ein- und Zusammenschalten von Filterfunktionen des multifunktionalen Datenfilter (4)s auf der Basis von Konfigurationsdaten, die durch die Applikationsidentifizierung bestimmt sind, die durch die entgegengenommenen Eingangsdaten definiert ist.

8. Computerbasierte Dienstzentrale (3) nach einem der Ansprüche 1 bis 7, **dadurch gekennzeichnet, dass** das Ausgangsmodul (11) eingerichtet ist, die vom multifunktionalen Datenfilter (4) selektierten Inhaltsdaten über ein Telekommunikationsnetz (1, 2) an den Benutzer zu übermitteln, der durch die entgegengenommenen Eingangsdaten definiert ist, und dass das Ausgangsmodul (11) eingerichtet ist, die Inhaltsdaten, die durch die entgegengenommenen Eingangsdaten definiert sind, über ein Telekommunikationsnetz (1, 2) an die durch die selektierten Benutzeridentifizierungen definierten Benutzer zu übermitteln.

9. Computerprogrammprodukt zum Betrieb der computerbasierten Dienstzentrale nach einem der vorstehenden Ansprüche, umfassend: ein computerlesbares Medium mit darin enthaltenen Computerprogrammcodemitteln zur Steuerung eines oder mehrerer Prozessoren einer computerbasierten Dienstzentrale (3) für die Selektion von Benutzeridentifizierungen und Inhaltsdaten, derart,
dass in der computerbasierten Dienstzentrale (3) Eingangsdaten entgegengenommen werden, welche aus einer Applikationsidentifizierung und einer Benutzeridentifizierung bzw. aus einer Applikationsidentifizierung und einer Inhaltsidentifizierung bestehen,
dass die computerbasierte Dienstzentrale (3) auf der Basis der entgegengenommenen Applikationsidentifizierung applikationsrelevante Daten selektiert, die applikationsrelevante Inhaltsmetadaten mit Informationen über die Inhaltsdaten und applikationsrelevante Benutzerdaten mit Benutzeridentifizierungen und zugeordneten Informationen über Benutzer umfassen, wobei die computerbasierte Dienstzentrale (3) die applikationsrelevanten Inhaltsmetadaten (8A) aus einer Inhaltsmetadatenbank (8) der computerbasierten Dienstzentrale (3) selektiert und wobei die computerbasierte Dienstzentrale (3) die applikationsrelevante Benutzerdaten (7a) aus einer Benutzerdatenbank (8) der computerbasierten Dienstzentrale (3) selektiert,
dass die computerbasierte Dienstzentrale (3) abhängig von der entgegengenommenen Applikationsidentifizierung automatisch Filterfunktionen in Serie und parallel schaltet, sodass
mehrere der Filterfunktionen so in Serie geschaltet werden, dass Daten, die durch eine vorgeschaltete erste Filterfunktion selektiert werden, zur Weiterbehandlung an eine nachgeschaltete zweite Filterfunktion weitergeleitet werden, und/oder
mehrere der Filterfunktionen so parallel geschaltet werden, dass erste Daten, die durch eine parallel geschaltete erste Filterfunktion selektiert werden, und zweite Daten, die durch eine parallel geschaltete zweite Filterfunktion selektiert werden, aggregiert werden,
dass die computerbasierte Dienstzentrale (3) eingeschaltete Filterfunktionen ausführt, wobei auf der Basis der applikationsrelevanten Daten Inhaltsdaten und/oder Benutzeridentifizierungen selektiert werden, und
dass die computerbasierte Dienstzentrale (3) Ausgangsdaten bereitstellt, die die von den Filterfunktionen selektierten Inhaltsdaten oder Benutzeridentifizierungen umfassen.

10. Das Computerprogrammprodukt nach Anspruch 9, **dadurch gekennzeichnet, dass** es weitere Computerprogrammcodemittel umfasst, die die Prozessoren der computerbasierten Dienstzentrale (3) derart steuern, dass die computerbasierte Dienstzentrale (3) auf der Basis der durch die entgegengenommenen Eingangsdaten definierten Applikationsidentifizierung, applikationsrelevante Daten selektiert, welche applikationsrelevante Benutzerkontextdaten (71 A) mit benutzerspezifischen Informationen über die aktuelle Umgebung der Benutzer umfassen, wobei die computerbasierte Dienstzentrale (3) die applikationsrelevanten Benutzerkontextdaten (71 A) aus einer Kontextdatenbank (71) der computerbasierten Dienstzentrale (3) selektiert, und dass die computerbasierte Dienstzentrale (3) abhängig von den entgegengenommenen Eingangsdaten automatisch eine von mehreren Kontextfilterfunktionen (411, 421) einschaltet, und dass die computerbasierte Dienstzentrale (3) die eingeschaltete Kontextfilterfunktion (411, 421) ausführt, wobei auf der Basis der applikationsrelevanten Daten Inhaltsdaten und/oder Benutzeridentifizierungen selektiert werden.

11. Das Computerprogrammprodukt nach einem der Ansprüche 9 bis 10, **dadurch gekennzeichnet, dass** es weitere Computerprogrammcodemittel umfasst, die die Prozessoren der computerbasierten Dienstzentrale (3) derart steuern, dass die computerbasierte Dienstzentrale (3) auf der Basis der durch die entgegengenommenen Eingangsdaten definierten Applikationsidentifizierung, applikationsrelevante Daten selektiert, welche applikationsrelevante Benutzerprofildaten (72A) mit benutzerspezifischen Informationen über Interessen und Personalien der Benutzer umfassen, wobei die computerbasierte Dienstzentrale (3) die applikationsrelevanten Benutzerprofildaten (72A) aus einer Profildatenbank (72) der computerbasierten Dienstzentrale (3) selektiert, und dass die computerbasierte Dienstzentrale (3) abhängig von den entgegengenommenen Eingangsdaten automatisch eine von mehreren Profilfilterfunktionen (412, 412a, 412b, 412b', 422, 422a, 422b, 422b') einschaltet, und dass die computerbasierte Dienstzentrale (3) die eingeschaltete Profilfilterfunktionen (412, 412a, 412b, 412b', 422, 422a, 422b, 422b') ausführt, wobei auf der Basis der applikationsrelevanten Daten Inhaltsdaten und/oder Benutzeridentifizierungen selektiert werden.

12. Das Computerprogrammprodukt nach einem der Ansprüche 9 bis 11, **dadurch gekennzeichnet, dass** es weitere Computerprogrammcodemittel umfasst, die die Prozessoren der computerbasierten Dienstzentrale (3) derart steuern, dass die computerbasierte Dienstzentrale (3) abhängig von den entgegengenommenen Eingangsdaten automatisch eine Benutzerclusterfilterfunktion (423) einschaltet, und dass die computerbasierte Dienstzentrale (3) die eingeschaltete Benutzerclusterfilterfunktion (423) ausführt, wobei Benutzeridentifizierungen selektiert werden auf der Basis applikationsrelevanter Benutzerprofildaten (72A), die mit applikationsrelevanten Benutzerprofildaten (72A) korrelieren, die einer Benutzeridentifizierung zugeordnet sind, die durch vorgeschaltete Filterfunktionen selektiert oder durch die Eingangsdaten definiert ist.

13. Das Computerprogrammprodukt nach einem der Ansprüche 9 bis 12, **dadurch gekennzeichnet, dass** es weitere Computerprogrammcodemittel umfasst, die die Prozessoren der computerbasierten Dienstzentrale (3) derart steuern, dass die computerbasierte Dienstzentrale (3) abhängig von den entgegengenommenen Eingangsdaten automatisch eine Inhaltsclusterfilterfunktion (413) einschaltet, und dass die computerbasierte Dienstzentrale (3) die eingeschaltete Inhaltsclusterfilterfunktion (413) ausführt, wobei Inhaltsdaten selektiert werden auf der Basis applikationsrelevanter Inhaltsmetadaten (8A), die mit applikationsrelevanten Inhaltsmetadaten (8A) korrelieren, die Inhaltsdaten zugeordnet sind, die durch vorgeschaltete Filterfunktionen selektiert oder durch die Eingangsdaten definiert sind.

14. Das Computerprogrammprodukt nach einem der Ansprüche 9 bis 13, **dadurch gekennzeichnet, dass** es weitere Computerprogrammcodemittel umfasst, die die Prozessoren der computerbasierten Dienstzentrale (3) derart steuern, dass die computerbasierte Dienstzentrale (3) die Filterfunktionen auf der Basis von in der computerbasierten Dienstzentrale (3) gespeicherten Konfigurationsdaten, die durch die Applikationsidentifizierung bestimmt sind, die durch die entgegengenommenen Eingangsdaten definiert ist, automatisch ein- und zusammenschaltet.

15. Das Computerprogrammprodukt nach einem der Ansprüche 9 bis 14, **dadurch gekennzeichnet, dass** es weitere Computerprogrammcodemittel umfasst, die die Prozessoren der computerbasierten Dienstzentrale (3) derart steuern, dass die computerbasierte Dienstzentrale (3) durch die Filterfunktionen selektierte Inhaltsdaten über ein Telekommunikationsnetz (1, 2) an einen Benutzer übermittelt, der durch die entgegengenommenen Eingangsdaten definiert ist, und dass die computerbasierte Dienstzentrale (3) Inhaltsdaten, die durch die entgegengenommenen Eingangsdaten definiert sind, über ein Telekommunikationsnetz (1, 2) an Benutzer übermittelt, die durch selektierte Benutzeridentifizierungen definiert sind, die durch die Filterfunktionen selektiert wurden.

## Claims

1. Computer-based service centre (3) for the selection of user identifications and content data, comprising:
a content metadatabase (8) with content metadata, which comprise information about the content data,
a user database (7) with user data, which comprise data about users assigned to the user identifications,
an input module (5) for receiving input data which consist of an application identification and a user identification, or respectively an application identification and a content identification,
an application filter (6) for selecting application-relevant data on the basis of a received application identification, the application-relevant data containing application-relevant content data (8A) selected from the content metadatabase (8A) and containing application-relevant user data (7a) selected from the user database (7),
a multifunctional data filter (4) which comprises filter functions (41) for selecting the content data and filter functions (42) for selecting user identifications each on the basis of application-relevant data, which automatically allow themselves to be connected in series and in parallel based on the received application identification, so that
a multiplicity of the filter functions are connected in series such that data which are selected through an upstream first filter function are forwarded for further processing to a downstream second filter function, and/or
a multiplicity of the filter functions are connected in parallel such that first data, which are selected through a first filter function connected in parallel, and second data, which are selected through a second filter function connected in parallel, are aggregated,
an output module (11) for preparing output data comprising the content data or user identifications selected by the multifunctional data filter (4).

2. Computer-based service centre (3) according to claim 1, **characterised in that** it comprises a context database (71) with user context data which comprise user-specific data about the current environment of the user, **in that** the application filter (6) is set up to select application-relevant data, comprising application-relevant user context data (71 A) selected from the context database (71) on the basis of the application identification defined through the received input data, and **in that** the multifunctional data filter (4) comprises a multiplicity of context filter functions (411, 421), which each switch on automatically based on the received input data, the multifunctional data filter (4) comprising context filter functions (411) for selection of the content data for a user identification (U) defined through the received input data, and context filter functions (421) for selecting user data for the content data defined through the received input data, in each case on the basis of the application-relevant data.

3. Computer-based service centre (3) according to one of the claims 1 to 2, **characterised in that** it comprises a profile database (72) with user profile data comprising user-specific data on interests and particulars of the user, and **in that** the application filter (6) is set up to select, on the basis of the application identification defined through the received input data, application-relevant data comprising application-relevant user profile data (72A) selected from the profile database (72).

4. Computer-based service centre (3) according to claim 3, **characterised in that** the multifunctional data filter (4) comprises a multiplicity of profile filter functions (412, 422) which switch on automatically based on the received input data, the multifunctional data filter (4) comprising profile filter functions (412, 412a, 412b, 412b') for selecting the content data for a user identification (U), defined through the received input data, and profile filter functions (422, 422a, 422b, 422b') for selecting the user identifications for content data defined through the received input data, in each case on the basis of the application-relevant data.

5. Computer-based service centre (3) according to one of the claims 3 or 4, **characterised in that** the multifunctional data filter (4) comprises a user cluster filter function (423), which automatically switches on based on the received input data, and which is set up to select user identifications on the basis of application-relevant user profile data (72A) which correlate with such application-relevant user profile data (72A) that are assigned to a user identification selected through filter functions connected upstream or defined through the input data.

6. Computer-based service centre (3) according to one of the claims 1 to 5, **characterised in that** the multifunctional data filter (4) comprises a content cluster filter function (413) which switches on automatically based on the received input data, and which is set up to select content data on the basis of application-relevant content metadata (8A) which correlate to such application-relevant content metadata (8A) that are assigned to content data selected through filter functions connected upstream or defined through the input data.

7. Computer-based service centre (3) according to one of the claims 1 to 6, **characterised in that** it comprises configuration data containing application-specific instructions for configuration of the multifunctional data filter (4), and **in that** it comprises a configuration module for automatic switching on and interconnecting filter functions of the multifunctional data filter (4) on the basis of configuration data which are determined by the application identification that is defined through the received input data.

8. Computer-based service centre (3) according to one of the claims 1 to 7, **characterised in that** the output module (11) is set up to transmit the content data selected by the multifunctional data filter (4) over a telecommunication network (1, 2) to the user who is defined through the received input data, and **in that** the output module (11) is set up to transmit the content data defined through the received input data over a telecommunication network (1, 2) to the users defined through the selected user identifications.

9. Computer program product for operation of the computer-based service centre according to one of the preceding claims, comprising a computer-readable medium with computer program code means contained therein for control of one or more processors of a computer-based service centre (3) for the selection of user identifications and content data, such that
input data are received in the computer-based service centre (3) which consist of an application identification and a user identification or respectively of an application identification and a content identification,
the computer-based service centre (3) selects application-relevant data on the basis of the received application identification, which comprise application-relevant content metadata with information about the content data and application-relevant user data with user identifications and assigned information about users, the computer-based service centre (3) selecting the application-relevant content metadata (8A) from a content metadatabase (8) of the computer-based service centre (3), and the computer-based service centre (3) selecting the application-relevant user data (7a) from a user database (8) of the computer-based service centre (3),
based on the received application identification, the computer-based service centre (3) automatically switches on filter functions in series and in parallel, so that
a multiplicity of filter functions are connected in series such that data which are selected by a first filter function connected upstream are forwarded for further processing to a downstream second filter function, and/or
a multiplicity of filter functions are connected in parallel such that first data, which are selected through a first filter function connected in parallel and second data which are selected through a second filter function connected in parallel are aggregated,
the computer-based service centre (3) carries out switched on filter functions, content data and/or user identifications being selected on the basis of the application-relevant data, and
the computer-based service centre (3) prepares output data, containing content data or user identifications selected by the filter functions.

10. The computer program product according to claim 9, **characterised in that** it comprises further computer program code means which control the processors of the computer-based service centre (3) such that, on the basis of the application identification defined through the received input data, the computer-based service centre (3) selects application-relevant data that comprise application-relevant user context data (71 A) with user-specific information about the current environment of the user, the computer-based service centre (3) selecting the application-relevant user context data (71A) from a context database (71) of the computer-based service centre (3), and **in that**, based on the received input data, the computer-based service centre (3) automatically switches on one of a multiplicity of context filter functions (411, 421), and **in that** the computer-based service centre (3) executes the switched-on context filter function (411, 421), content data and/or user identifications being selected on the basis of the application-relevant data.

11. The computer program product according to one of the claims 9 to 10, **characterised in that** it comprises further computer program code means which control the processors of the computer-based service centre (3) such that, on the basis of the application identification defined by the received input data, the computer-based service centre (3) selects application-relevant data comprising application-relevant user profile data (72A) with user-specific information on interests and particulars of the users, the computer-based service centre (3) selecting the application-relevant user profile data (72A) from a profile database (72) of the computer-based service centre (3), and **in that**, based on the received input data, the computer-based service centre (3) automatically switches on one of a multiplicity of profile filter functions (412, 412a, 412b, 412b', 422, 422a, 422b, 422b'), and **in that** the computer-based service centre (3) executes the switched-on profile filter functions (412, 412a, 412b, 412b', 422, 422a, 422b, 422b'), content data and/or user identifications being selected on the basis of the application-relevant data.

12. The computer program product according to one of the claims 9 to 11, **characterised in that** it comprises further computer program code means which control the processors of the computer-based service centre (3) such that, based on the received input data, the computer-based service centre (3) automatically switches on a user cluster filter function (423), and **in that** the computer-based service centre (3) executes the switched-on user cluster filter function (423), user identifications being selected on the basis of the application-relevant user profile data (72A), which correlate with application-relevant user profile data (72A), which are assigned to a user identification, which is selected through filter functions connected upstream or is defined through the input data.

13. The computer program product according to one of the claims 9 to 12, **characterised in that** it comprises further computer program code means which control the processors of the computer-based service centre (3) such that, based on the received input data, the computer-based service centre (3) automatically switches on a content cluster filter function (413), and **in that** the computer-based service centre (3) executes the switched-on content cluster filter function (413), content data being selected on the basis of application-relevant content metadata (8A) which correlate with application-relevant content metadata (8A) that are assigned to content data which are selected through the filter functions connected upstream or are defined through the input data.

14. The computer program product according to one of the claims 9 to 13, **characterised in that** it comprises further computer program code means which control the processors of the computer-based service centre (3) such that the computer-based service centre (3) automatically switches on and interconnects the filter functions on the basis of configuration data stored in the computer-based service centre (3) which are determined through the application identification that is defined through the received input data.

15. The computer program product according to one of the claims 9 to 14, **characterised in that** it comprises further computer program code means which control the processors of the computer-based service centre (3) such that the computer-based service centre (3) transmits over a telecommunication network (1, 2) to a user, who is defined through the received input data, content data selected through the filter functions, and **in that** the computer-based service centre (3) transmits content data, which are defined through the received input data, over a telecommunication network (1, 2) to users who are defined through selected user identifications which have been selected through the filter functions.

## Revendications

1. Centrale de services informatisée (3) pour la sélection d'identifications d'utilisateur et de données de contenu, comprenant :
une banque de métadonnées de contenu (8) avec des données d'utilisateurs, qui comprennent des informations sur les données de contenu,
une banque de données d'utilisateurs (7) avec des données d'utilisateurs qui comprennent des informations associées aux identifications d'utilisateurs significatives d'utilisateurs,
un module d'entrée (5) pour recevoir des données d'entrée qui se composent d'une identification d'application et d'une identification d'utilisateur respectivement d'une identification d'application et d'une identification de contenu,
un filtre d'applications (6) pour la sélection de données significatives d'applications sur la base d'une identification d'application reçue, les données significatives d'applications comprennent des métadonnées de contenu (8A) significatives d'applications sélectionnées dans la banque de métadonnées de contenu (8) et des données d'utilisateurs (7A) significatives d'applications sélectionnées dans la banque de données d'utilisateurs (7),
un filtre de données multifonctionnel (4) qui comprend des fonctions de filtre (41) pour la sélection des données de contenu et des fonctions de filtre (42) pour la sélection des identifications d'utilisateurs respectivement sur la base des données significatives d'applications, qui peuvent intervenir automatiquement en série et en parallèle indépendamment de l'identification d'application reçue, de sorte que
plusieurs des fonctions de filtre sont activées en série de sorte que des données qui sont sélectionnées par une première fonction de filtre activée en amont sont transmises pour le traitement ultérieur à une seconde fonction de filtre activée en aval, et/ou
plusieurs des fonctions de filtres sont activées en parallèle de sorte que des premières données qui sont sélectionnées par une première fonction de filtre activée en parallèle et des secondes données qui sont sélectionnées par une seconde fonction de filtre activée en parallèle sont agrégées,
un module de sortie (11) pour la mise à disposition de données de sortie qui comprennent les identifications d'utilisateurs ou les données de contenu sélectionnées par le filtre de données multifonctionnel (4).

2. Centrale de services informatisée (3) selon la revendication 1, **caractérisée en ce qu'**elle comprend une banque de données de contexte (71) avec des données de contexte d'utilisateurs qui comprennent des informations spécifiques aux utilisateurs sur l'environnement actuel des utilisateurs, **en ce que** le filtre d'applications (6) est paramétré pour la sélection de données significatives d'applications qui comprennent des données de contexte d'utilisateurs (71A) significatives d'applications sélectionnées dans la banque de données de contexte (71) sur la base de l'identification d'application définie par les données d'entrée reçues et **en ce que** le filtre de données multifonctionnel (4) comprend plusieurs fonctions de filtre de contexte (411, 421) qui sont automatiquement activées respectivement indépendamment des données d'entrée reçues, le filtre de données multifonctionnel (4) comprenant des fonctions de filtre de contexte (411) pour la sélection des données de contenu pour une identification d'utilisateurs (U) définie par les données d'entrée reçues et des fonctions de filtre de contexte (421) pour la sélection des données utilisateurs pour des données de contenu définies par les données d'entrée reçues respectivement sur la base des données significatives d'applications.

3. Centrale de services informatisée (3) selon l'une des revendications 1 à 2, **caractérisée en ce qu'**elle comprend une banque de données de profils (72) avec des données de profil d'utilisateur qui comprennent des informations spécifiques à l'utilisateur sur les intérêts et l'identité des utilisateurs et **en ce que** le filtre d'application (6) est paramétré pour la sélection de données significatives d'applications qui comprenne des données de profil d'utilisateur (72A) significatives d'applications, sélectionnées dans la banque de données de profils (72) sur la base de l'identification d'application définie par les données d'entrée reçues.

4. Centrale de services informatisée (3) selon la revendication 3, **caractérisée en ce que** le filtre de données multifonctionnel (4) comprend plusieurs fonctions de filtre de profil (412, 422) qui s'activent automatiquement indépendamment des données d'entrée reçues, le filtre de données multifonctionnel (4) comprenant des fonctions de filtre de profils (412, 412a, 412b, 412b') pour la sélection des données de contenu pour une identification d'utilisateurs (U) définie par les données d'entrée reçues et des fonctions de filtre de profils (422, 422a, 422b, 422b') pour la sélection des identifications d'utilisateurs pour des données de contenu définies par les données d'entrée reçues respectivement sur la base des données significatives d'application.

5. Centrale de services informatisée (3) selon l'une des revendications 3 ou 4, **caractérisée en ce que** le filtre de données multifonctionnel (4) comprend une fonction de filtre de groupes d'utilisateurs (423) qui s'active automatiquement indépendant des données d'entrée reçues et qui est paramétrée pour la sélection d'identifications d'utilisateurs sur la base de données de profils d'utilisateur significatives d'application (72A) qui sont en corrélation avec de telles données de profils d'utilisateur (72A) qui sont associées à une d'utilisateurs définie par les données d'entrée ou sélectionnées par des fonctions de filtre activées en amont.

6. Centrale de services informatisée (3) selon l'une des revendications 1 à 5, **caractérisée en ce que** le filtre de données multifonctionnel (4) comprend une fonction de filtre de groupes de contenus (413) qui s'active automatiquement indépendamment des données d'entrée reçues et qui est paramétrée pour la sélection de données de contenu sur la base de métadonnées de contenu significatives d'application (8A) qui sont mises en corrélation avec des métadonnées de contenu significatives d'application (8A) qui sont associées à des données de contenu définies par les données d'entrée reçues ou sélectionnées par des fonctions de filtre activées en amont.

7. Centrale de services informatisée (3) selon l'une des revendications 1 à 5, **caractérisée en ce qu'**elle comprend des données de configuration qui comprennent des instructions spécifiques d'application pour la configuration du filtre de données multifonctionnel (4) et **en ce qu'**elle comprend un module de configuration pour l'activation automatique de fonctions de filtre du filtre de données multifonctionnel (4) sur la base des données de configuration qui sont déterminées par l'identification d'application qui est définie par les données d'entrée reçues.

8. Centrale de services informatisée (3) selon l'une des revendications 1 à 7, **caractérisée en ce que** le module de sortie (11) est paramétré de manière à transmettre les données de contenu sélectionnées par le filtre de données multifonctionnel (4) à l'utilisateur par un réseau de télécommunication (1, 2) qui est défini par les données d'entrée reçues et **en ce que** le module de sortie (11) est paramétré pour transmettre aux utilisateurs définis par les identifications sélectionnées d'utilisateurs par un réseau de télécommunication (1, 2) les données de contenu qui sont définies par les données d'entrée reçues.

9. Produit de programme informatique pour l'exploitation de la centrale de services informatisée selon l'une des revendications précédentes comprenant : un support lisible par ordinateur avec les moyens de code de programme informatique pour la commande d'un ou de plusieurs processeurs d'une centrale de services informatisée (3) pour la sélection d'identifications d'utilisateurs et des données de contenus de sorte que
dans la centrale de services informatisée (3), des données d'entrée sont reçues qui se composent d'une identification d'application et d'une identification d'utilisateur respectivement d'une indentification d'application et d'une indentification de contenu,
en ce que la centrale de services informatisée (3) sélectionne et sur la base de l'identification d'application reçue des données significatives d'application qui comprennent des métadonnées de contenu significatives d'application avec des informations sur les données de contenu et des données d'utilisateurs significatives d'application avec des identifications d'utilisateurs et des informations associées sur les utilisateurs, la centrale de services informatisée (3) sélectionnant les métadonnées de contenus (8A) significatives d'application dans une banque de métadonnées de contenu (8) de la centrale de services informatisée (3) et la centrale de services informatisée (3) sélectionnant les données d'utilisateurs significatives d'application (7a) dans une banque de données d'utilisateur (8) de la centrale de services informatisée (3),
en ce que la centrale de services informatisée (3) active en série et en parallèle en fonction de l'identification d'application reçue automatiquement des fonctions de filtre de sorte que plusieurs des fonctions de filtre sont activées en série de sorte que des données qui sont sélectionnées par une première fonction de filtre activée en amont sont transmises pour le traitement ultérieur à une seconde fonction de filtre activée en aval, et/ou
plusieurs des fonctions de filtres sont activées en parallèle de sorte que des premières données qui sont sélectionnées par une première fonction de filtre placée en parallèle et des secondes données qui sont sélectionnées par une seconde fonction de filtre activée en parallèle sont agrégées,
la centrale de services informatisée (3) exécute des fonctions de filtres activées, sur la base des données significatives d'application, des données de contenu et/ou des identifications d'utilisateurs étant sélectionnées, et
en ce que la centrale de services informatisée (3) met à disposition des données de sortie qui comprennent les données de contenu ou identifications d'utilisateur sélectionnées par les fonctions de filtre.

10. Produit de programme informatique selon la revendication 9, **caractérisé en ce qu'**il comprend un autre moyen de code de programme informatique qui commande les processeurs de la centrale de services informatisée (3) de sorte que la centrale de services informatisée (3) sélectionne sur la base de l'identification d'application définie par les données d'entrée reçues, des données significatives d'application qui comprennent des données de contexte d'utilisateur (71A) avec des informations spécifiques d'utilisateur sur l'environnement actuel des utilisateurs, la centrale de services informatisée (3) sélectionnant les données de contexte d'utilisateur significatives d'application (71A) dans une banque de données de contexte (71) de la centrale de services informatisée (3) et **en ce que** la centrale de services informatisée (3) active automatiquement en fonction des données d'entrée reçues une des plusieurs fonctions de filtre de contextes (411, 421) et **en ce que** la centrale de services informatisée (3) exécute la fonction de filtre de contexte activées (411, 421),
sur la base des données significatives d'application, des données de contenu et/ou des identifications d'utilisateur étant sélectionnées.

11. Produit de programme informatique selon l'une des revendications 9 à 10, **caractérisé en ce qu'**il comprend d'autres moyens de code de programme informatique qui commandent les processeurs de la centrale de services informatisée (3) de sorte que la centrale de services informatisée (3) sélectionne sur la base de l'identification d'application définie par les données d'entrée reçues, des données significatives d'application qui comprennent des données de profil d'utilisateurs (72A) significatives d'application avec des informations sur les intérêts et l'identité des utilisateurs, la centrale de services informatisée (3) sélectionnant les données de profil d'utilisateurs (72A) dans une banque de données de profils (72) de la centrale de services informatisée (3) et **en ce que** la centrale de services informatisée (3) active automatiquement indépendamment des données d'entrée reçues une des plusieurs fonctions de filtre de profils (412, 412a, 412b, 412b', 422, 422a, 422b, 422b') et **en ce que** la centrale de services informatisée (3) exécute les fonctions de filtre de profiles activées (412, 412a, 412b, 412b', 422, 422a, 422b, 422b'), des données de contenu et/ou des identifications d'utilisateur étant sélectionnées sur la base des données significatives d'application.

12. Produit de programme informatique selon l'une des revendications 9 à 11, **caractérisé en ce qu'**il comprend d'autres moyens de code de programme informatique qui commandent les processeurs de la centrale de services informatisée (3) de sorte que la centrale de services informatisée (3) sélectionne en fonction des données d'entrée reçues, automatiquement une fonction de filtre de groupes d'utilisateur (423) et **en ce que** la centrale de services informatisée (3) exécute la fonction de filtre de groupes d'utilisateurs (423) activée, des identifications d'utilisateur étant sélectionnées sur la base de données de profils d'utilisateur (72A) significatifs d'application qui sont mises en corrélation avec des données de profils d'utilisateur (72A) qui sont associées à une identification d'utilisateur qui est sélectionnée par des fonctions de filtre activées en amont ou est définie par les données reçues.

13. Produit de programme informatique selon l'un des revendications 9 à 12, **caractérisé en ce qu'**il comprend d'autres moyens de code de programme qui commandent les processeurs de la centrale de services informatisée (3), **en ce que** la centrale de services informatisée (3) active automatiquement une fonction de filtre de groupe de contenus (413) en fonction des données d'entrée reçues et **en ce que** la centrale de services informatisée (3) exécute la fonction de filtre de groupe de contenu (413), des données de contenu étant sélectionnées sur la base de métadonnées de contenu significatives d'application (8A) qui sont en corrélation avec des métadonnées de contenus (8A) significatifs d'application qui sont associées à des données de contenu qui sont sélectionnées par des fonctions de filtre activées en amont ou sont définies par les données d'entrées.

14. Produit de programme informatique selon l'un des revendications 9 à 13, **caractérisé en ce qu'**il comprend d'autres moyens de code de programme qui commandent les processeurs de la centrale de services informatisée (3), **en ce que** la centrale de services informatisée (3) active automatiquement les fonctions de filtre sur la base des données de configuration stockées dans la centrale de services informatisée (3) qui sont définies par l'identification d'application qui est définie par les données d'entrée reçues.

15. Produit de programme informatique selon l'une des revendications 9 à 14, **caractérisé en ce qu'**il comprend d'autres moyens de code de programme qui commandent les processeurs de la centrale de services informatisée (3), de sorte que la centrale de services informatisée (3) transmet à un utilisateur des données de contenu sélectionnées par les fonctions de filtre par un réseau de télécommunication (1, 2), utilisateur qui est défini par les données d'entrée reçues ,et **en ce que** la centrale de services informatisée (3) transmet des données de contenu qui sont définies par les données d'entrée reçues par un réseau de télécommunication (1, 2) à des utilisateurs qui sont définis par des identifications sélectionnées d'utilisateurs qui ont été sélectionnées par les fonctions de filtre.
